# EUROPEAN PATENT APPLICATION

(11) **EP 4 099 543 A1**
(43) Date of publication of application: **07.12.2022**
(21) Application number: 22175006.0
(22) Date of filing: 24.05.2022
(51) Int. Cl.: H02K 1/28, H02K 7/00

(54) **ELECTRIC MACHINE ROTOR AND RELATED ELECTRIC MACHINE**

(30) Priority: 04.06.2021 IT 202100014567
(71) Applicant: Marelli Europe S.p.A., 20011 Corbetta (MI) (IT)
(72) Inventor: LELI, Francesco, I-20011 Corbetta, MILANO (IT); MAGRI, Marco, I-20011 Corbetta, MILANO (IT); STAMATO, Salvatore, I-20011 Corbetta, MILANO (IT); DEL GRECO, Stefano, I-20011 Corbetta, MILANO (IT)
(74) Representative: Mitola, Marco

(57) **Abstract**

A rotor (6) of an electric machine (4) comprising a drive shaft (8) extending along a rotation axis (X-X), a plurality of foils (12) provided with an insertion seat (16) at which they are coaxially keyed to the drive shaft (8) at a keying portion (20) of the drive shaft (8), the foils (12) globally having the shape of a circular sector extending from an outer edge (22), corresponding to an outer diameter of the rotor (6), and an inner edge (23), corresponding to a minimum or inner diameter delimiting said insertion seat (16) which interfaces with the keying portion (20) of the drive shaft (8). The keying portion (20) comprises a lateral surface (24) which interfaces with the insertion seat (16) of the foils (12), wherein the insertion seat (16) comprises locking portions (36), which interface with said lateral surface (24) of the keying portion (20). At said locking portions (36), the foils (12) comprise, on the side opposite to the keying portion (20), lightenings (44) which give elasticity to the locking portions (36) in a radial direction (R-R), perpendicular to the rotation axis (X-X).

## Description

### FIELD OF APPLICATION

The present invention relates to a rotor of an electric machine, and to the related electric machine comprising said rotor.

### BACKGROUND ART

In the field of rotors of electric machines, for example of electric motors, a strong connection is required between the rotor shaft and the related magnetic foils in turn axially stacked along the rotation axis of the rotor; such a connection is to ensure indeed the transmission of the torque between the components in all speed and torque ranges in which the electric motor operates.

This connection can be obtained through the mechanical coupling by interference of the aforesaid components.

The centrifugal forces due to the high rotation speed (which can reach up to about 20, 000 - 25, 000 rpm) cause radial deformations on the coupling diameter of the foils with the rotor, which are different between shaft and foils: therefore, an increased interference is required between the components in order to ensure a strong and secure mechanical connection.

The assembly between the components can be obtained by press-fitting, i.e., by cold driving (at ambient temperature) foils onto the shaft, or by shrink-fitting, i.e., after heating the foil and keying the shaft or after cooling the shaft and keying the foil pack.

Press-fitting is always preferred, but it is not applicable when increased interferences are required because problems due to the plasticity of the materials would be created, with subsequent formation of burrs.

Hot keying may actually ensure high interferences during the assembly, but has higher processing costs and inferior results because it may result in the discoloring of the components and the occurrence of approximate positioning tolerances.

The press-fitting operation, associated with increased values of interference between the components, results in high pressing forces and the generation of shavings and burrs between the shaft and the foils.

During the shaft driving process, the shavings, which gradually increase as the shaft is pressed through the foils, may cause a cold welding between the shaft and said foils: therefore, if on the one hand the driving force is increased, and thus the ability to transmit torque even at high rotations speeds, on the other the foils of the rotor and/or the lateral wall of the shaft are damaged.

Therefore, the known solutions are not capable of simultaneously ensuring a secure, stable and accurate coupling which can allow the transmission of high torques and/or powers without damaging the foils and/or the shaft.

### PRESENTATION OF THE INVENTION

Therefore, the need is felt to solve the drawbacks and limitations mentioned above with reference to the prior art.

Such a need is met by an electric machine rotor according to claim 1 and by an electric machine according to claim 16.

### DESCRIPTION OF THE DRAWINGS

Further features and advantages of the present invention will become more comprehensible from the following description of preferred embodiments thereof, given by way of non-limiting examples, in which:

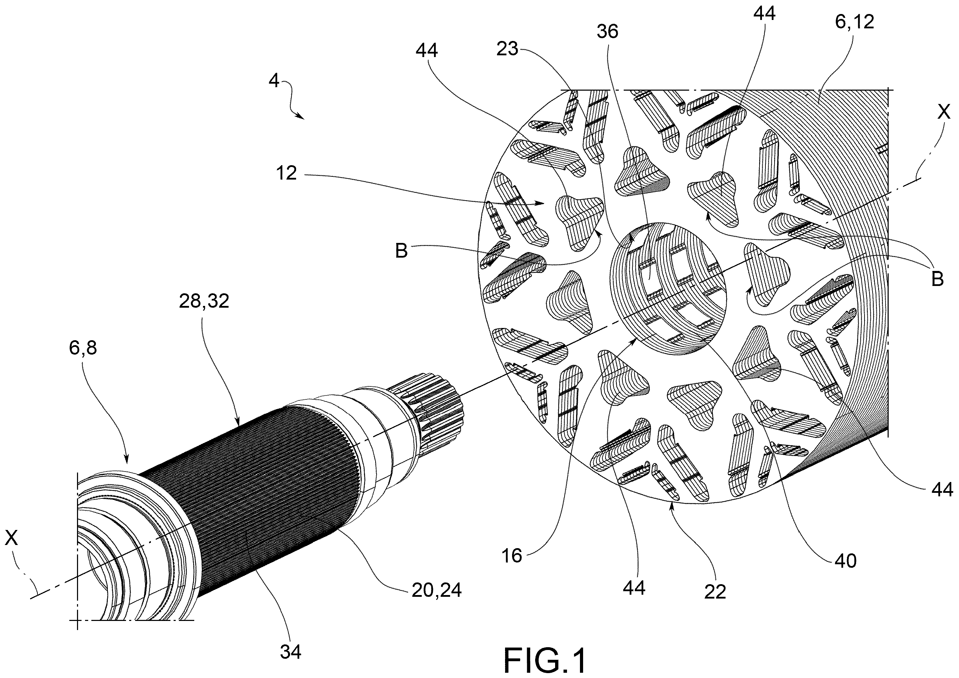

Figure 1 depicts a perspective view, in separate parts, of a pack of foils being keyed onto a drive shaft of an electric machine according to an embodiment of the present invention;

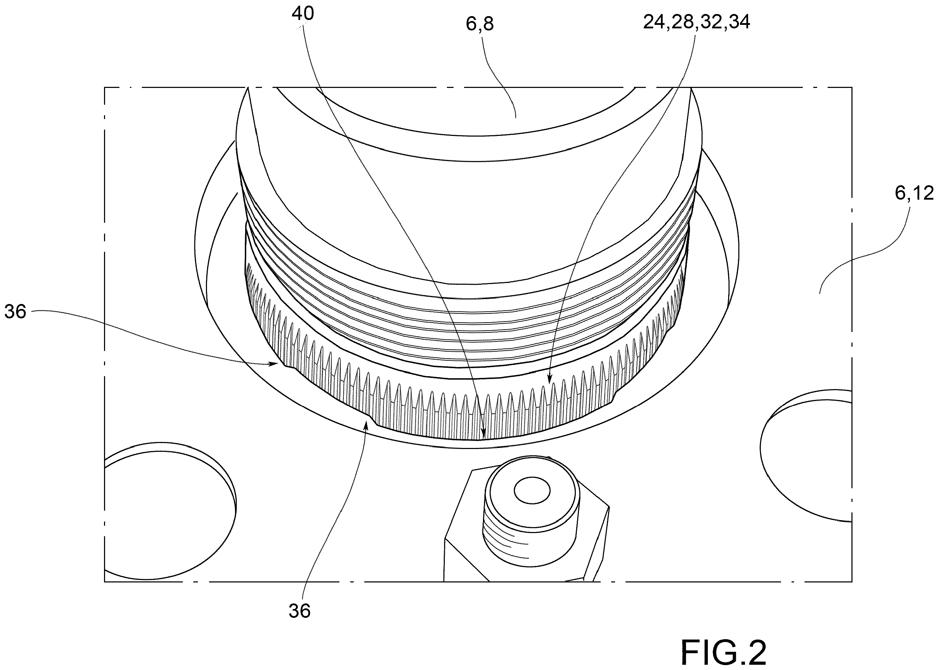

Figure 2 depicts a perspective view, in assembled configuration, of a drive shaft of an electric machine according to an embodiment of the present invention;

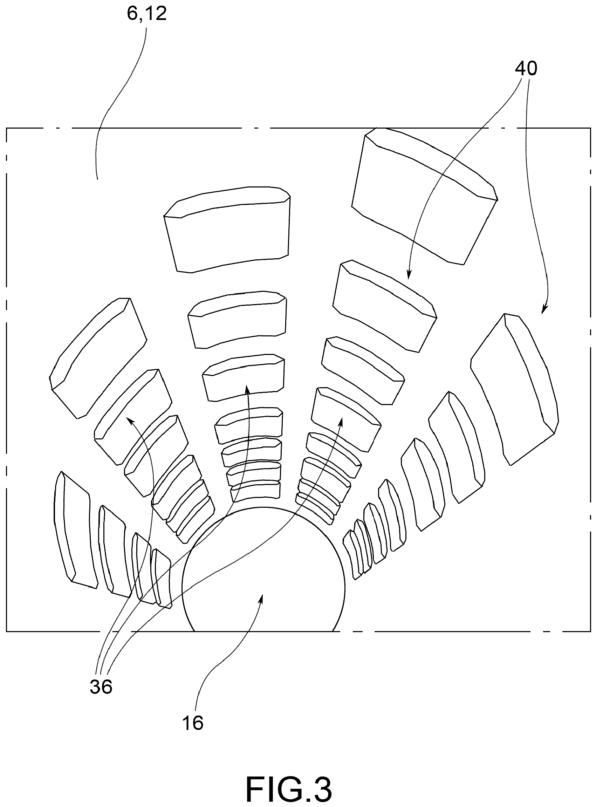

Figure 3 depicts a perspective view of a pack of angularly staggered foils for the rotor of an electric machine according to an embodiment of the present invention;

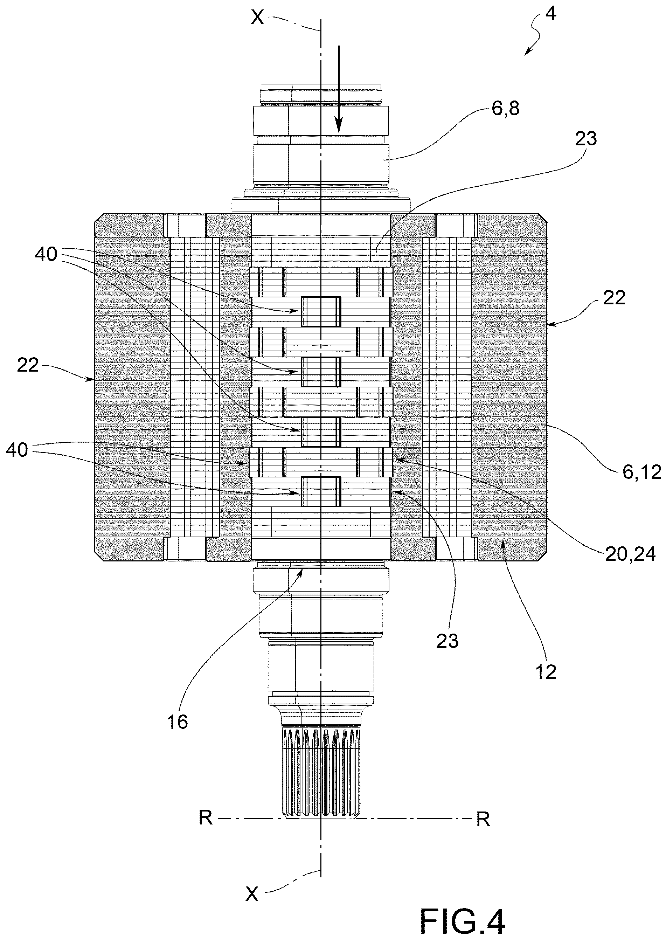

Figure 4 depicts a diagrammatic side view of a step of keying a pack of foils onto a drive shaft of an electric machine according to an embodiment of the present invention;

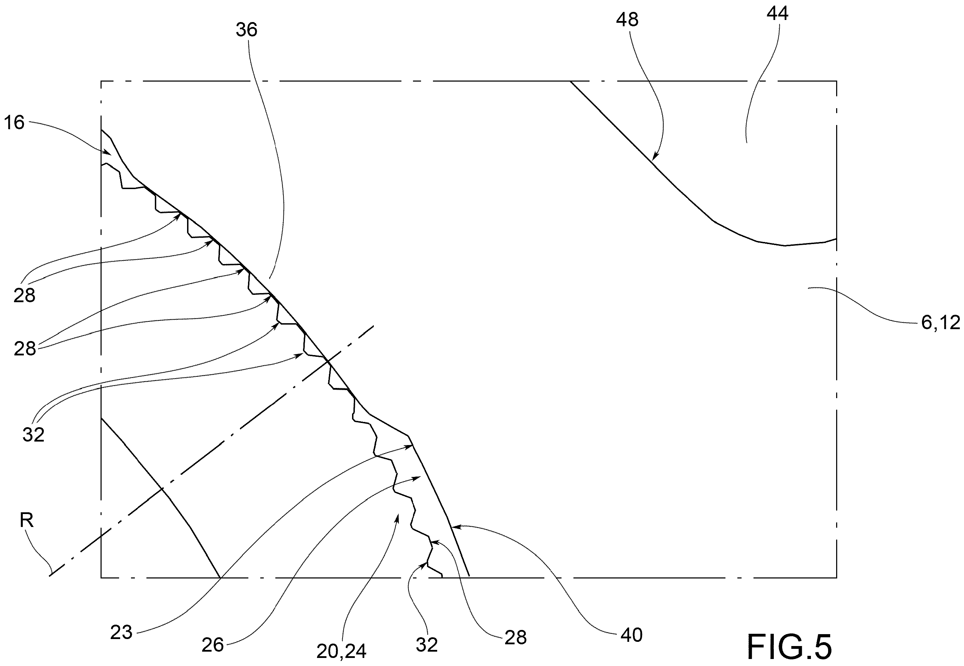

Figure 5 depicts a sectional view of a coupling detail between a foil and a drive shaft according to an embodiment of the present invention;

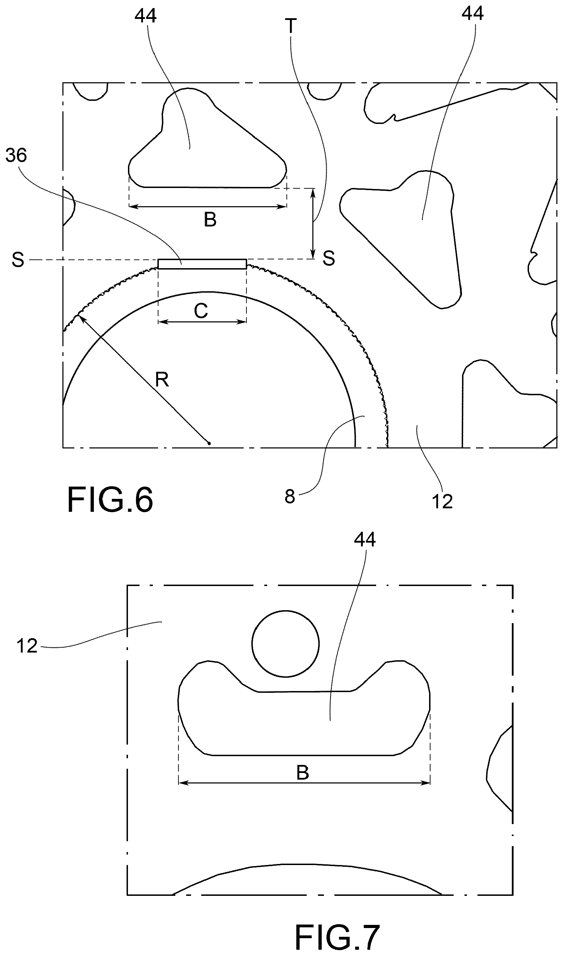

Figures 6-7 depict details of sectional views of foils according to possible constructional variants of the present invention.

### DETAILED DESCRIPTION

With reference to the aforementioned drawings, an overall diagrammatic view of an electric machine comprising a rotor 6 having a drive shaft 8 onto which a plurality of foils 12 according to the present invention is keyed, is indicated as a whole by reference numeral 4.

It should be premised that electric machine means both an electric motor and an electric generator.

The drive shaft 8 extends along a rotation axis X-X, and supports, in an integral manner with the rotation thereof, a plurality of foils 12 made of a ferromagnetic material in a known manner.

Said foils 12 are each provided with an insertion seat 16 at which they are coaxially keyed to the drive shaft 8 at a keying portion 20 of the drive shaft 8 comprising a lateral surface 24 which interfaces with the insertion seat 16 of the foils 12.

The foils 12 globally have the shape of a circular sector extending from an outer edge 22, corresponding to an outer diameter of rotor 6, and an inner edge 23, corresponding to a minimum or inner diameter delimiting said insertion seat 16 which interfaces with the keying portion 20 of the drive shaft 8.

According to a possible embodiment, said lateral surface 24 of the keying portion 20 has a plurality of ridges 28 and grooves 32.

For example, at the keying portion 20, the diameter of the ridges 28 exceeds the diameter of the grooves 32 by a percentage between 5% and 15% of the diameter of the grooves 32, in which said diameters are measured with respect to the rotation axis X-X.

The keying portion 20 can be obtained in various manners and may comprise a knurling, for example.

According to a possible embodiment, the keying portion 20 comprises a grooved profile having a plurality of grooves 34 parallel to said rotation axis X-X.

The insertion seat 16 comprises locking portions 36, which interface with the ridges 28 of the keying portion 20: the friction between the locking portions 36 and the ridges 28 of the keying portion 28 causes the restraint, both translationally and rotationally with respect to the rotation axis X-X, between foil 12 and the drive shaft 8.

The locking portions 36 are alternated with recesses 40 identifying clearances with said ridges 28 of the keying portion 20: the presence of said clearances reduces the friction forces exchanged between the foils 12 and the drive shaft 8 and facilitates the step of keying the foils 12.

Advantageously, at said locking portions 36 (i.e., in angular alignment with said locking portions 36 with respect to the rotation axis X-X), the foils 12 comprise, on the side opposite to the keying portion 20, lightenings 44 which give elasticity to the locking portions 36 in a radial direction R-R, perpendicular to the rotation axis X-X.

Said lightenings 44 comprise cavities defined by closed polylines, with respect to a section plane perpendicular to said rotation axis X-X.

Said cavities 44 can pass through an axial thickness of each foil 12, said thickness being measured parallel to the rotation axis X-X of the drive shaft 8.

According to a possible embodiment, said cavities 44 have a triangular shape, having the base B facing said locking portions 36.

The cavities 44 can have other shapes than the triangular one, and said cavities 44 generally define a closed polyline profile.

The base B of said polyline preferably forms the longer edge or stretch of the closed polyline and is always arranged on the side of the inner diameter, facing the locking portions 36. The base B is preferably arranged at and above the locking portions 36.

"T" is defined as the minimum distance in a radial direction R-R between the inner edge 23 of foil 12 and base B, or longer edge of the closed polyline.

"Ri" is defined as the inner radius of foil 12 defining said inner edge 23 of said foil 12; "B" is defined as the width or base of the lightening or cavity 44 in tangential direction S-S, orthogonal to said radial direction R-R.

"C" is defined as the arc of contact between the locking portions 36 and the lateral surface 24 of the keying portion 20 of the drive shaft 8.

Preferably, in order to obtain the correct elasticity and functionality of the connection between the foils 12 and the drive shaft 8, it is provided that:
0.15 < T/Ri < 0.5.

Preferably, in order to obtain the correct elasticity and functionality of the connection between the foils 12 and the drive shaft 8, it is provided that: 0.35 < C/B < 0.45, preferably 0.40 < C/B < 0.42.

According to a possible embodiment, the locking portions 36 have a smaller angular extension than the recesses 40, with respect to the rotation axis X-X.

The locking portions 36 and the lightenings 44 are preferably arranged according to an axial-symmetric arrangement with respect to the rotation axis X-X.

According to a possible embodiment, mutually adjacent foils 12 have recesses 40 angularly staggered with respect to the rotation axis X-X so that they do not overlap or only partially overlap one another.

According to a possible embodiment, the mutually adjacent foils 12 have locking portions 36 angularly staggered with respect to the rotation axis X-X so that they do not overlap or only partially overlap one another.

Preferably, mutually adjacent foils 12 are angularly staggered from one another along the rotation axis X-X so that the locking portions 36 of a first foil 12' overlap the recesses 40 of a second foil 12'' adjacent to the first foil 12'.

As can be appreciated from the above description, the present invention allows overcoming the drawbacks introduced in the known art.

Advantageously, the solution described allows limiting the friction/contact forces when cold driving the foils onto the drive shaft by virtue of decreasing the contact surface between the foils of the rotor and the drive shaft.

For this purpose, a special geometry has indeed been introduced, comprising protruding locking portions which interface by friction with the keying portion of the drive shaft, and lightenings or pockets forming contactless areas so as to decrease the overall keying force of the foils onto the drive shaft.

In order to further facilitate said keying, the foils have, at the locking portions, lightenings which increase the radial elasticity of the locking portions: in other words, by virtue of said lightenings, when keying the foils onto the drive shaft, the locking portions can radially retract, away from the keying portion of the drive shaft, and the force required for the keying itself is thus decreased.

Moreover, by virtue of the angular staggering between the locking portions and the recesses of the mutually adjacent foils, any scraps/shavings formed during the keying operation can be accommodated inside the recesses without accumulating with one another.

The lack of shaving/scrap accumulations not only allows decreasing the friction force, but also avoiding misalignments and/or imbalances between the foils and the drive shaft.

Moreover, especially if ridges and grooves are used on the keying portion of the shaft, it is possible to obtain localized plastic deformations on the insertion seat of the foils in case of keying with increased interference.

Moreover, the alternating ridges and grooves further decreases the friction force with the locking portions of the foils and facilitates the localized plastic deformations of the locking portions, thus decreasing the overall keying forces.

In order to meet specific contingent needs, those skilled in the art can make several changes and variations to the solutions described above, all contained within the scope of the invention as defined by the following claims.

## Claims

1. Rotor (6) of an electric machine (4) comprising:
- a drive shaft (8) extending along a rotation axis (X-X) ,
- a plurality of foils (12) provided with an insertion slot (16) in correspondence with which they are coaxially keyed to the drive shaft (8) at a keying portion (20) of the drive shaft (8),
- the foils (12) having overall the form of a circular sector extending from an outer edge (22), corresponding to an outer diameter of the rotor (6), and an inner edge (23), corresponding to a minimum or inner diameter delimiting said insertion seat (16) which interfaces with the keying portion (20) of the drive shaft (8),
- wherein said keying portion (20) comprises a lateral surface (24) which interfaces with the insertion seat (16) of the foils (12),
- wherein the insertion seat (16) comprises locking portions (36), which interface with said lateral surface (24) of the keying portion (20),
- wherein, at said locking portions (36) the foils (12) comprise on the side opposite the locking portion (20), lightenings (44) which give elasticity to the locking portions (36) in a radial direction (R-R), perpendicular to the axis of rotation (X-X).

2. The rotor (6) of an electric machine (4) according to claim 1, wherein a lateral surface (24) of the keying portion (20) comprises a plurality of ridges (28) and grooves (32), and wherein the insertion seat (16) comprises locking portions (36), which interface with the ridges (28) of the locking portion (20), alternating with recesses (40) which identify clearance with said ridges (28) .

3. The rotor (6) of an electric machine (4) according to claim 2, wherein, at the keying portion (20), the diameter of the ridges (28) exceeds the diameter of the grooves (32) by between 5% and 15% of the diameter of the grooves (32).

4. The rotor (6) of an electric machine (4) according to claim 1, 2, or 3, wherein said lightenings (44) comprise cavities defined by closed polylines, with respect to a cross-section plane perpendicular to said axis of rotation (X-X).

5. The rotor (6) of an electric machine (4) according to claim 4, wherein said cavities (44) have a triangular shape, having a base (B) facing said locking portions (36), i.e., towards the inner edge (23).

6. The rotor (6) of an electric machine (4) according to claim 5, wherein the base (B) is arranged at and above the locking portions (36).

7. The rotor (6) of an electric machine (4) according to claim 5 or 6, wherein having defined T, the minimum distance in a radial direction (R-R), between the inner edge (23) of the foil (12) and the base (B) or longer edge of the closed polyline, and defined 'Ri' the inner radius of the foil (12) defining said inner edge (23) the following is true:
0.15 < T/Ri < 0.5.

8. The rotor (6) of an electric machine (4) according to claim 5, 6 or 7, wherein having defined 'C' as the arc of contact between the locking portions (36) and the lateral surface (24) of the keying portion (20) of the drive shaft (8), and defined 'B' as the width of the base of said cavity (44) with respect to a tangential direction (S-S) the following is true:
0.35 < C/B < 0.45, preferably 0.40 < C/B < 0.42.

9. The rotor (6) of an electric machine (4) according to any of the claims from 1 to 8, wherein the locking portions (36) have an angular extension smaller than the angular extension of the recesses (40), with respect to the axis of rotation (X-X).

10. The rotor (6) of an electric machine (4) according to any of the claims from 1 to 9, wherein the locking portions (36) and the lightenings (44) are arranged in an axial-symmetric arrangement with respect to the axis of rotation (X-X).

11. The rotor (6) of an electric machine (4) according to any of the claims from 1 to 10, wherein mutually adjacent foils (12) have recesses (40) angularly staggered with respect to the axis of rotation (X-X), so that they do not overlap or only partially overlap each other.

12. The rotor (6) of an electric machine (4) according to any of the claims from 1 to 11, wherein mutually adjacent foils (12) have locking portions (36) angularly staggered with respect to the axis of rotation (X-X), so that they do not overlap or overlap only partially.

13. The rotor (6) of an electric machine (4) according to any of the claims from 1 to 12, wherein mutually adjacent foils (12) are angularly staggered from each other, along the axis of rotation (X-X), so that the locking portions (36) of a first foil (12') overlap with the recesses (40) of a second foil (12") adjacent to the first foil (12').

14. The rotor (6) of an electric machine (4) according to any of the claims from 1 to 13, wherein said keying portion (20) comprises a knurling.

15. The rotor (6) of an electric machine (4) according to any of the claims from 1 to 14, wherein said keying portion (20) comprises a grooved profile having a plurality of grooves (34) parallel to said axis of rotation (X-X).

16. An electric machine (4) comprising a rotor (6) according to any of the claims from 1 to 15.
